# EUROPÄISCHE PATENTSCHRIFT

(11) **EP 0 997 201 B1**
(45) Veröffentlichungstag und Bekanntmachung des Hinweises auf die Patenterteilung: **28.12.2005**
(21) Anmeldenummer: 99120037.9
(22) Anmeldetag: 18.10.1999
(51) Int. Cl.: B05D 5/00

(54) **Lackfehlererkennung und Beseitigung**
Detecting paint defaults and repairing them
Détection des défauts de peinture et leur réparation

(30) Priorität: 29.10.1998 DE 19849802
(43) Veröffentlichungstag der Anmeldung: 03.05.2000
(73) Patentinhaber: Volkswagen Aktiengesellschaft, 38436 Wolfsburg (DE)
(72) Erfinder: Jöhnck, Jörn, 38518 Gifhorn (DE); Huck, Bernhard Dr., 38112 Braunschweig (DE)

(56) Entgegenhaltungen:
- DE-A- 4 121 464
- JP-A- 10 044 042
- PATENT ABSTRACTS OF JAPAN vol. 018, no. 303 (P-1751), 9. Juni 1994 (1994-06-09) & JP 06 066732 A (MITSUBISHI MOTORS CORP), 11. März 1994 (1994-03-11)

## Beschreibung

Die vorliegende Erfindung betrifft ein Lackierverfahren für eine Serie von Kraftfahrzeugkarosserien mit den Schritten:
- nacheinander Lackieren der Kraftfahrzeugkarosserien unter Bildung eines Lacküberzugs auf den Kraftfahrzeugkarosserien,
- optoelektronisches Erfassen des Lacküberzuges,
- Auswerten der optoelektronischen Erfassung des Lacküberzuges auf Lackfehler in dem Lacküberzug,
- Ermitteln der Koordinaten der bei der Auswertung erkannten Lackfehler, und
- Beseitigen der bei der Auswertung ermittelten Lackfehler unter Bezugnahme der Koordinaten.

Bei der Lackierung von Kraftfahrzeugkarosserien oder auch anderen komplexen Gegenständen ist aufgrund der Serienverfahrensabläufe, der Größe der Gegenstände und auch der Taktgeschwindigkeit es unvermeidlich, daß das Erscheinungsbild der Lackoberfläche durch Fehlstellen beeinträchtigt ist. Insbesondere im Karosseriebau kann die Nachbearbeitung erheblich sein. Typische Lackfehlerstellen sind beispielsweise Fremdkörpereinschlüsse, Krater, Lackstrukturfehler, Welligkeiten, Schleifriefen, Dellen, Kocher (eingeschlossene Gasblase) oder Beulen. Üblicherweise fährt zur Kontrolle der lackierten Oberfläche die Karosserie durch einen speziell nach den zu überprüfenden Oberflächen ausgeleuchteten Bereich. In diesem Bereich wird visuell (mit den Augen) die Oberfläche nach Fehlern untersucht. Hierbei muß permanent der Einfallswinkel für das Auge verändert werden, um Strukturveränderungen wie Einschlüsse, Welligkeiten, Schleifriefen, Kratzer oder ähnliches im Lack erkennen zu können. Bei dieser Form von subjektiver Erkennung ermüdet das Auge relativ schnell, die Nichterkennungsquote liegt entsprechend bei 5 bis 10 %. Außerdem liegt der zeitliche Aufwand der Erkennung bei der gesamten Fehlerbehebung bei bis zu 80 %.

Die DE-A-4121464 beschreibt ein Lackierverfahren für eine Serie von Kraftfahrzeugkarosserien der eingangs beschriebenen Gattung. Bei diesem bekannten Verfahren werden die Lackfehler optoelektronisch erfasst, die Koordinaten der Lackfehler werden ermittelt und es erfolgt eine Reparatur der bei der Auswertung ermittelten Lackfehler, die manuell durchgeführt werden kann, im Allgemeinen aber automatisch durchgeführt wird mittels einer Robotereinheit. Bei diesem bekannten Verfahren erfolgt die optoelektronische Erfassung und Auswertung von Lackfehlern mittels einer Einrichtung, die sich am Ende des Arms des Roboters befindet, sowie einer Kamera, die die lackierte Oberfläche abtastet. Licht wird dabei von einer Einrichtung abgegeben, von der lackierten Oberfläche der Karosserie reflektiert und fällt auf eine Kamera. Die eine Lichtstrahlung erzeugende Einrichtung und die Kamera werden über eine Robotersteuerung gesteuert und entlang der Oberfläche der Karosserie bewegt. Mittels nur einer einzigen Videokamera wird die Oberfläche der Karosserie abgetastet. Dies ist bei der Lackfehlererfassung ein zeitraubender Vorgang.

In der JP-A-10 440 42 wird ein Verfahren zurBeseitigung von Fehlern in der Lackierung einer Kraftfahrzeugkarosserie beschrieben, bei dem Erkennungsmittel vorgesehen sind, die einen Defekt in der Lackierung der Karosserie erkennen, der dann anschließend mittels einer Wasserstrahldüseneinheit repariert wird. An der Karosserie wird eine Markierung angebracht, beispielsweise mittels eines Filzstiftes oder mittels einer fluoreszierenden Substanz, die auf UV-Licht reagiert. Es ist eine Kamera vorgesehen, die auf einem Roboter montiert ist, wobei eine Steuerung für die Fehlererkennung vorhanden ist, sowie eine Recheneinheit, die die Information über die Fehlstelle in der Lackierung verarbeitet. Mittels des Roboters wird die Kamera in drei Dimensionen bewegt und dann die Beseitigung des Lackfehlers von der Robotereinheit mittels Wasserstrahl vorgenommen.

Der vorliegenden Erfindung liegt die Aufgabe zugrunde, ein Lackierverfahren der eingangs genannten Gattung zu schaffen, bei dem die optoelektronische Erfassung des Lacküberzuges auf Lackfehler in vergleichsweise kurzer Zeit möglich ist.

Diese Aufgabe wird erfindungsgemäß gelöst mit den Maßnahmen des Anspruchs 1.

Die Unteransprüche beinhalten besonders bevorzugte Maßnahmen, die zum Teil dem Perfektionieren dienen.

Bei dem erfindungsgemäßen Verfahren zur Lackfehlererkennung und Beseitigung kommt insbesondere ein Oberflächenerkennungssystem (scannen) mit Kameras zum Einsatz, die die Oberflächenfehler im Lack optoelektronisch erkennen. Hieran schließt sich vorzugsweise eine Fehlermarkierungsstation an, in der automatisch in Korrelation zur optoelektronischen Fehlererkennung die Fehler (optisch) markiert werden. Anschließend erfolgt eine (manuelle) Fehlerbeseitigung, z.B. durch Ausschleifen, Polieren und/oder Lackieren. In einer abgewandelten Verfahrensweise werden die erkannten Fehler nicht optisch markiert, sondern die Fehlerkoordinaten werden karosseriebezogen abgelegt und einer automatisierten Fehlerbeseitigungsanlage zugeführt. Dies hat den Vorteil, daß die Fehlerbeseitigungsanlage numerisch gesteuert dem Fehler zugeführt wird, so daß Fehler einer manuellen Zuführung, insbesondere ein Übersehen einer Markierung, weitgehend vermieden sind. Auch bei der automatisierten Zuführung der Fehlerbeseitigungsvorrichtung kann eine manuelle Unterstützung hinsichtlich der Materialabtragungstiefe und -art (Ausschleifen, Aussanden, Polieren, Lackieren) vorteilhaft sein. Der wichtigste Punkt im gesamten Verfahrensablauf bleibt jedoch die Korrelation zwischen der optoelektronischen Fehlererkennung und dem Fehler, sei es durch entsprechend gesteuerte Markierungsvorrichtungen oder Fehlerbeseitigungsvorrichtungen.

Besonders vorteilhaft ist bei dem erfindungsgemäßen Verfahren, daß die optoelektronisch erkannten Lackfehler karosseriebezogen dokumentiert werden können, so daß beispielsweise bei einer Endkontrolla des Kraftfahrzeuges die vollständige Entfernung aller optoelektronisch erkannter Lackfehler überprüft werden kann.

Das Verfahren läßt sich vorteilhaft auch für Teilbereiche eines lackierten komplexen Gegenstandes einsetzen, das bedeutet im wesentlichen nur der überwiegend waagrechten oder überwiegend senkrechten Flächen oder auch sonstiger Teilbereiche. Hierdurch können die Vorteile einer optoelektronischen Erfassung mit den Vorteilen einer visuellen Fehlererfassung kombiniert werden, d.h. die optoelektronische Erfassung erfolgt dort, wo sie günstig durchführbar ist, zuzüglich erfolgt eine visuelle Erfassung der übrigen Bereiche.

Für die optoelektronische Lackfehlererkennung werden vorzugsweise Flächenkameras eingesetzt, insbesondere in Fullframe-Anordnung. Hierbei ist eine geringe Überlappung der Bildaufnahmen der Kameras miteinander von Vorteil. Geeignet sind beispielsweise Kameras mit einer Auflösung von ca. 0,1 mm und einem Bildfeld von z.B. 500 x 700 Pixel. Bei einer solchen Anlage ist eine Bildüberlappung im Bereich von ca. 5 bis 25 insbesondere 10 bis 15 Pixel sinnvoll.

Bei dem erfindungsgemäßen Verfahren lassen sich u.a. Lackeinschlüsse bis ca. 0,7 mm (aber auch kleinere) mit hoher Sicherheit erkennen, Krater werden sogar bis 0,2 mm erkannt.

Die Erfindung wird im folgenden anhand eines Ausführungsbeispiels und Figuren näher beschrieben.

Es zeigen
- Figur 1: einen Aufbau in einer Karosserieproduktionslinie; und
- Figur 2: schematisch das Prinzip der Fehlererkennung.

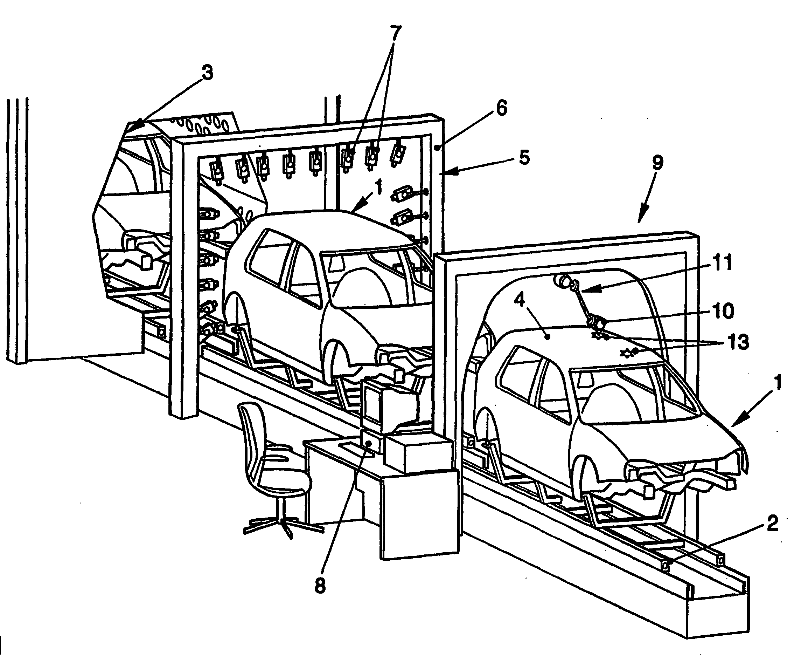

Wie in Figur 1 dargestellt, verlassen Karosserien 1 auf einem Förderband 2 einen Abkühlungsraum 3, in dem die Karosserien 1 nach ihrer Beschichtung mit einem Lack 4 nach dem Einbrennen des Lackes Zeit haben, sich der Umgebungstemperatur anzupassen. Unmittelbar nach Verlassen der Abkühlungszone 3 durchfahren die Karosserien 1 eine Fullframe-Flächenkameraanlage 5, in der an einem Rahmen 6 eine Vielzahl von Kameras 7 angeordnet ist, die lückenlos auf die Lackoberfläche 4 der Karosserien 1 ausgerichtet sind.

Die Aufnahmen der Kameras 7 gelangen in eine Rechenstation 8, in der die optoelektronische Oberflächenerfassung des Lackes auf Fehler in der Beschichtung ausgewertet wird. Anschließend wird die Karosserie 1 an einem Markierungsroboter 9 vorbeigeführt, der aufgebaut ist aus einem Markierungskopf 10, der auf einem Roboterarm 11 sitzt, der wiederum entlang eines Rahmens 12 geführt ist. Der Markierungskopf 10 wird über die Rechenstation 8 hierbei derart gesteuert, daß er Lackfehler markiert 13, die zuvor über die Kameras 7 erfaßt wurden.

Die so markierten Fehler können anschließend, beispielsweise manuell behoben werden. Hierbei kommen insbesondere Ausschleifen, Polieren und/oder Lackieren zum Einsatz.

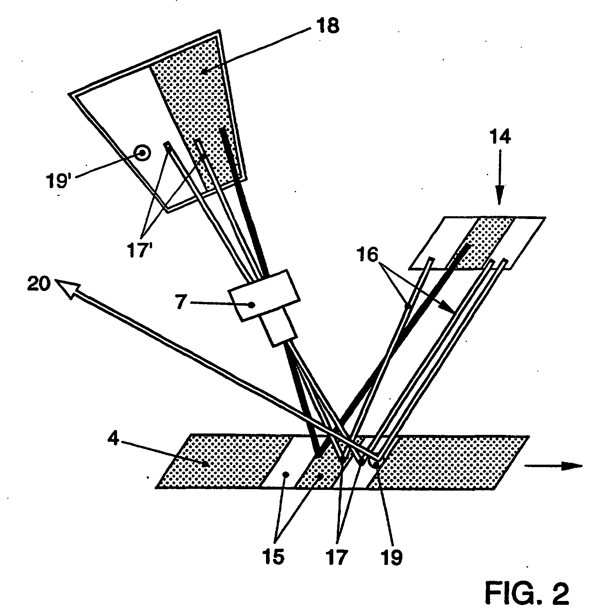

Die Lackfehlererkennung erfolgt wie in Figur 2 dargestellt. Die Lackoberfläche 4 wird mit einem Streffenlicht 14 belegt, das ein Streifenmuster 15 auf der durch das Streifenlicht geführten Lackoberfläche abbildet. Die einzelnen Strahlen 16 des Streifenlichts 14 treffen dabei auf intakte Oberflächenbereiche 17, werden dort reflektiert und von der Kamera 7 erfaßt. Die Kamera bildet die intakten Oberflächenbereiche 17 als Bereiche 17' auf der Pixelmatrix ab. Das Projektionsbild 18 stellt somit das Streifenmuster dar. Sofern Lichtstrahlen 16 jedoch von einem Lackfehler 19 abgelenkt 20 werden, fehlt dieser Lichtpunkt im Projektionsbild 18 und bildet dort ein Abbild 19' des Lackfehlers 19. Die Recheneinheit 8 korreliert die Position der bandgeführten Karosserie 1 mit dem erkannten Fehler 19, so daß anschließend die Markierung 13 des Lackfehlers 19 positionsgenau erfolgt.

Die Erfindung erlaubt eine automatische, personalunabhängige Fehlererkennung, so daß keine physisch oder psychisch abhängigen Schwankungen die Fehlererkennung beeinträchtigen können. Es erfolgt ein konstantes Erkennen praktisch aller optoelektronisch erkennbarer Fehler auf der Karosserieaußenfläche. Gleichzeitig erfolgt die Fehlererkennung über einen kurzen Abschnitt des Bandverlaufes, d.h. in einer Zeit, die gleich oder geringer eines Bandtaktes liegen kann. Dies entspricht einem geringen Bruchteil der Gesamtzeit Fehlererkennung-Fehlerbehebung.

## Patentansprüche

1. Lackierverfahren für eine Serie von Kraftfahrzeugkarosserien mit den Schritten:
- nacheinander Lackieren der Kraftfahrzeugkarosserien unter Bildung eines Lacküberzugs auf den Kraftfahrzeugkarosserien,
- optoelektronisches Erfassen des Lacküberzuges,
- Auswerten der optoelektronischen Erfassung des Lacküberzuges auf Lackfehler in dem Lacküberzug,
- Ermitteln der Koordinaten der bei der Auswertung erkannten Lackfehler, und
- Beseitigen der bei der Auswertung ermittelten Lackfehler unter Bezugnahme der Koordinaten,
**dadurch gekennzeichnet, dass** für das optoelektronische Erfassen eine Vielzahl von Kameras (7) verwendet wird, die an einem Rahmen (6) angeordnet ist, wobei die Kameras lückenlos auf die Lackoberfläche (4) der Karosserien (1) ausgerichtet sind und die Kraftfahrzeugkarosserien den Rahmen (6) durchfahren.

2. Verfahren nach Anspruch 1, **dadurch gekennzeichnet, dass** die Lackfehler nach dem Ermitteln und vor dem Beseitigen automatisch markiert werden, wobei die Kraftfahrzeugkarosserien (1) an einem Markierungsroboter (9) vorbeigeführt werden.

3. Verfahren nach Anspruch 2, **dadurch gekennzeichnet, dass** der Markierungsroboter (9) aufgebaut ist aus einem Markierungskopf (10), der auf einem Roboterarm (11) sitzt.

4. Verfahren nach Anspruch 3, **dadurch gekennzeichnet, dass** der Roboterarm (11) entlang eines Rahmens (12) geführt ist, den die Kraftfahrzeugkarosserien (1) durchfahren.

5. Verfahren nach Anspruch 3 oder 4, **dadurch gekennzeichnet, dass** der Markierungskopf (10) über eine Rechenstation (8), in die die Aufnahmen der Kameras (7) gelangen, derart gesteuert wird, dass er Lackfehler (13) markiert, die zuvor über die Kameras (7) erfasst wurden.

6. Verfahren nach einem der vorhergehenden Ansprüche, **dadurch gekennzeichnet, dass** das Beseitigen der Lackfehler manuell erfolgt.

7. Verfahren nach einem der vorhergehenden Ansprüche, **gekennzeichnet durch** den Schritt:
- Ablegen der Koordinaten der erkannten Lackfehler in einem Speicher, bezogen auf die jeweilige Kraftfahrzeugkarosserie.

8. Verfahren nach Anspruch 7, **gekennzeichnet durch** den Schritt:
- Automatisches Bearbeiten der Lackfehler in dem Lackfehlerbeseitigungsschritt.

9. Verfahren nach einem der vorhergehenden Ansprüche, **dadurch gekennzeichnet, dass** die optoelektronische Erfassung im Anschluss an eine Abkühlzone unmittelbar nach dem Lackieren erfolgt.

10. Verfahren nach einem der vorhergehenden Ansprüche, **dadurch gekennzeichnet, dass** das Beseitigen der Lackfehler ein Ausschleifen, Absanden, Polieren und/oder Nachlackieren beinhaltet.

11. Verfahren nach einem der vorhergehenden Ansprüche, **dadurch gekennzeichnet, dass** eine Teilauswertung im Wesentlichen der waagerechten Flächen der Kraftfahrzeugkarosserien erfolgt.

12. Verfahren nach einem der vorhergehenden Ansprüche, **dadurch gekennzeichnet, dass** als Lackfehler Einschlüsse (fest, flüssig oder gasförmig) mindestens ≥ 1 mm, insbesondere ≥ 0,7 mm und/oder Krater mindestens ≥ 1 mm, insbesondere ≥ 0,5 mm erfasst werden.

13. Verfahren nach einem der vorhergehenden Ansprüche, **dadurch gekennzeichnet, dass** zur optoelektronischen Erfassung des Lacküberzuges ein Streifenlicht auf den Lacküberzug projiziert wird.

14. Verfahren nach Anspruch 13, **dadurch gekennzeichnet, dass** das Streifenlicht eine Streifenbreite von ca. 5 bis 15 mm hat.

15. Verfahren nach einem der vorhergehenden Ansprüche, **dadurch gekennzeichnet, dass** zur optoelektronischen Erfassung Flächenkameras mit einer geringen Überlappung eingesetzt werden.

16. Verfahren nach einem der vorhergehenden Ansprüche, **dadurch gekennzeichnet, dass** der Schritt Beseitigen der Lackfehler ein automatisches oder manuelles Justieren mindestens einer Lackapplikationsvorrichtung ist oder enthält.

## Claims

1. Painting method for a production line of motor vehicle bodies having the following steps:
- successive painting of the motor vehicle bodies forming a paint coating on the motor vehicle bodies,
- optoelectronic sensing of the paint coating,
- evaluation of the optoelectronic sensing of the paint coating for paint defects in the paint coating,
- determination of the coordinates of the paint defects recognized in the evaluation, and
- elimination of the paint defects determined in the evaluation with reference to the coordinates,
**characterized in that** a large number of cameras (7) arranged on a frame (6) is used for the optoelectronic sensing, the cameras being aligned continuously with the paint surface (4) of the bodies (1), and the motor vehicle bodies passing through the frame (6).

2. Method according to Claim 1, **characterized in that** the paint defects are marked out automatically following determination and prior to elimination, the motor vehicle bodies (1) being guided past a marking robot (9).

3. Method according to Claim 2, **characterized in that** the marking robot (9) is composed of a marking head (10) which rests on a robot arm (11).

4. Method according to Claim 3, **characterized in that** the robot arm (11) is guided along a frame (12) through which the motor vehicle bodies (1) pass.

5. Method according to Claim 3 or 4, **characterized in that** the marking head (10) is controlled via a computer station (8), to which the pictures from the cameras (7) are passed, such that it marks out paint defects (13) which have previously been sensed using the cameras (7).

6. Method according to one of the preceding claims, **characterized in that** the elimination of the paint defects takes place manually.

7. Method according to one of the preceding claims, **characterized by** the following step:
- storing of the coordinates of the recognized paint defects in a memory, with reference to the respective motor vehicle body.

8. Method according to Claim 7, **characterized by** the following step:
- automatic treatment of the paint defects in the paint defect elimination step.

9. Method according to one of the preceding claims, **characterized in that** the optoelectronic sensing takes place next to a cooling zone immediately after painting.

10. Method according to one of the preceding claims, **characterized in that** the elimination of the paint defects includes grinding, sanding, polishing and/or repainting.

11. Method according to one of the preceding claims, **characterized in that** partial evaluation largely of the horizontal surfaces of the motor vehicle bodies takes place.

12. Method according to one of the preceding claims, **characterized in that** inclusions (solid, liquid or gaseous) of at least ≥ 1 mm, in particular ≥ 0.7 mm and/or craters of at least ≥ 1 mm, in particular ≥ 0.5 mm, are sensed as paint defects.

13. Method according to one of the preceding claims, **characterized in that** a striplight is projected onto the paint coating for the optoelectronic sensing of the paint coating..

14. Method according to Claim 13, **characterized in that** the striplight has a strip width of approximately 5 to 15 mm.

15. Method according to one of the preceding claims, **characterized in that** surface cameras having little overlap are used for optoelectronic sensing purposes.

16. Method according to one of the preceding claims, **characterized in that** the step of eliminating the paint defects is or contains automatic or manual adjustment of at least one paint application device.

## Revendications

1. Procédé de peinture pour une série de carrosseries de véhicules automobiles, comportant les étapes suivantes:
- peinture des carrosseries de véhicules automobiles l'une après l'autre en formant un revêtement de peinture sur les carrosseries automobiles,
- détection optoélectronique du revêtement de peinture,
- évaluation de la détection optoélectronique du revêtement de peinture pour rechercher les défauts de peinture dans le revêtement de peinture,
- détermination des coordonnées des défauts de peinture identifiés lors de la détection, et
- réparation des défauts de peinture déterminés lors de l'évaluation en se référant aux coordonnées,
**caractérisé en ce que** l'on utilise pour la détection optoélectronique une pluralité de caméras (7), qui sont disposées sur un cadre (6), les caméras étant dirigées en continuité vers la surface de peinture (4) des carrosseries (1) et les carrosseries de véhicules automobiles défilant à travers le cadre (6).

2. Procédé selon la revendication 1, **caractérisé en ce que** les défauts de peinture sont marqués automatiquement après leur détection et avant leur réparation, les carrosseries de véhicules automobiles (1) étant conduites devant un robot de marquage (9).

3. Procédé selon la revendication 2, **caractérisé en ce que** le robot de marquage (9) est composé d'une tête de marquage (10), qui est montée sur un bras de robot (11).

4. Procédé selon la revendication 3, **caractérisé en ce que** le bras de robot (11) est guidé le long d'un cadre (12), à travers lequel les carrosseries de véhicules automobiles (1) défilent.

5. Procédé selon la revendication 3 ou 4, **caractérisé en ce que** la tête de marquage (10) est commandée par une station de calcul (8), dans laquelle arrivent les enregistrements des caméras (7), de telle façon qu'elle marque les défauts de peinture (13) qui ont été au préalable détectés par les caméras (7).

6. Procédé selon l'une quelconque des revendications précédentes, **caractérisé en ce que** la réparation des défauts de peinture est effectuée manuellement.

7. Procédé selon l'une quelconque des revendications précédentes, **caractérisé par** l'étape suivante:
- dépôt des coordonnées des défauts de peinture détectés dans une mémoire, rapportée à chaque carrosserie de véhicule automobile.

8. Procédé selon la revendication 7, **caractérisé par** l'étape suivante:
- traitement automatique des défauts de peinture dans l'étape de réparation des défauts de peinture.

9. Procédé selon l'une quelconque des revendications précédentes, **caractérisé en ce que** la détection optoélectronique est effectuée à la suite d'une zone de refroidissement immédiatement après la peinture.

10. Procédé selon l'une quelconque des revendications précédentes, **caractérisé en ce que** la réparation des défauts de peinture comprend un meulage, un sablage, un polissage et/ou une nouvelle peinture.

11. Procédé selon l'une quelconque des revendications précédentes, **caractérisé en ce que** l'on effectue une évaluation partielle essentiellement des surfaces horizontales des carrosseries de véhicules automobiles.

12. Procédé selon l'une quelconque des revendications précédentes, **caractérisé en ce que** l'on détecte comme défauts de peinture des inclusions (solides, liquides ou gazeuses) au moins ≥ 1 mm, en particulier ≥ 0,7 mm, et/ou des cratères au moins ≥ 1 mm, en particulier ≥ 0,5 mm.

13. Procédé selon l'une quelconque des revendications précédentes, **caractérisé en ce que** l'on projette une lumière rasante sur le revêtement de peinture pour la détection optoélectronique du revêtement de peinture.

14. Procédé selon la revendication 13, **caractérisé en ce que** la lumière rasante a une largeur de bande d'environ 5 à 15 mm.

15. Procédé selon l'une quelconque des revendications précédentes, **caractérisé en ce que** l'on utilise des caméras de surface à faible recouvrement pour la détection optoélectronique.

16. Procédé selon l'une quelconque des revendications précédentes, **caractérisé en ce que** l'étape de réparation des défauts de peinture est ou comprend un ajustage automatique ou manuel d'au moins un dispositif d'application de peinture.
